# DEMANDE DE BREVET EUROPEEN

(11) **EP 0 952 434 A1**
(43) Date de publication de la demande: **27.10.1999**
(21) Numéro de dépôt: 99400930.6
(22) Date de dépôt: 16.04.1999
(51) Int. Cl.: G01G 17/08, A01K 29/00

(54) **Procédé de contrôle automatique et continu de la prise de poids d'un ensemble d'animaux et dispositif pour la mise en oeuvre de ce procédé**

(30) Priorité: 20.04.1998 FR 9804905
(71) Demandeur: Société André Glon S.A., 56920 Noyal Pontivy (FR)
(72) Inventeur: Durand, Yannick, 56300 Le Sourn (FR)
(74) Mandataire: Loyer, Bertrand

(57) **Abrégé**

Le procédé de contrôle automatique et continu de la prise de poids d'un groupe déterminé d'animaux consiste à utiliser l'attrait de l'aliment ou de l'abreuvement pour provoquer la venue, un par un, d'animaux sur un plateau de pesage, accessible naturellement à tous les animaux d'un groupe et équipé de moyens limitant son accès à un seul animal à la fois et tels que l'animal ne soit pesé que lorsqu'il vient s'alimenter ou s'abreuver ; de telle sorte que, à partir de ces pesées individuelles, on puisse établir un poids individuel moyen des animaux du groupe.

## Description

La présente invention a pour objet un procédé de contrôle automatique et continu de la prise de poids d'un ensemble d'animaux et plus particulièrement d'animaux à l'engraissement par pesages individuels.

Dans le cas d'élevage de porcs, ceux-ci sont en général disposés dans des salles, elles-mêmes subdivisées en cases, ces cases ayant approximativement les mêmes dimensions et étant munies chacune de moyens pour l'alimentation automatique (appelées usuellement "alimentateur") et de moyens d'abreuvement. Au fur et à mesure de la prise de poids des animaux, leur nombre dans une case diminue. Ainsi, dans la phase dite de post-sevrage pendant laquelle le poids des animaux est compris entre 5 et 40 kgs, il y aura entre 10 et 40 porcelets dans une même case ; alors que dans la phase dite de finition qui va de 40 kgs à l'abattage, il y aura environ 10 à 30 animaux dans une même case et éventuellement plus.

On conçoit qu'il est alors très difficile pour l'éleveur de surveiller l'évolution du poids des animaux : alors que c'est un critère de surveillance qui est essentiel.

La présente invention est relative à un procédé permettant de surveiller cette évolution.

Dans le brevet US-4.624.215 GOLDSTEIN, on a décrit un procédé consistant à disposer dans un poulailler trois appareils de pesage, reliés à un ordinateur, sur lesquels les volailles peuvent d'elles-mêmes monter ou descendre à leur guise. Ce système n'est pas fiable car le même poulet peut monter successivement sur les trois appareils ; ou bien il peut, à sa guise, monter et descendre continuellement sur le même appareil de pesage ; ou encore ne pas y monter du tout ; ou même encore y monter à plusieurs à la fois.

Les indications de poids données par un tel système sont beaucoup trop aléatoires et pratiquement inutilisables.

La présente invention concerne un procédé donnant des indications d'une très grande précision.

L'invention concerne un procédé de contrôle automatique et continu de la prise de poids d'un groupe déterminé d'animaux consistant à utiliser l'attrait de l'aliment ou de l'abreuvement pour provoquer la venue, un par un, d'animaux sur un plateau de pesage, accessible naturellement à tous les animaux d'un groupe et équipé de moyens limitant son accès à un seul animal à la fois et tels que l'animal ne soit pesé que lorsqu'il vient s'alimenter ou s'abreuver ; de telle sorte que, à partir de ces pesées individuelles on puisse établir de façon fiable un poids individuel moyen des animaux du groupe.

Le dispositif pour la mise en oeuvre de ce procédé est constitué par : un espace clos, ou case, dans lequel est enfermé un groupe de "n" animaux ; un alimentateur ou auge comportant "m" compartiments séparés les uns des autres de façon à n'être accessible qu'à un seul animal à la fois, mais d'accès libre ; et un plateau de pesage placé dans un quelconque des compartiments.

Le dispositif peut en outre comporter l'une ou l'autre des dispositions suivantes :
a) les compartiments ou auges sont séparés par des bat-flancs et leur largeur est déterminée en fonction de la taille et du poids des animaux,
b) le nombre "m" des compartiments ou auges est déterminé en fonction du nombre et de la taille des animaux présents dans la case et est, dans la pratique compris entre 1 et 10. On peut considérer qu'il faut environ 1 compartiment pour 6 animaux, pour une alimentation sèche et environ 10 à 40 places pour une alimentation "soupe", à l'auge.
c) le sol des compartiments ne comportant pas de plateau de pesée est muni d'une margelle de même hauteur ayant même aspect et même état de surface.

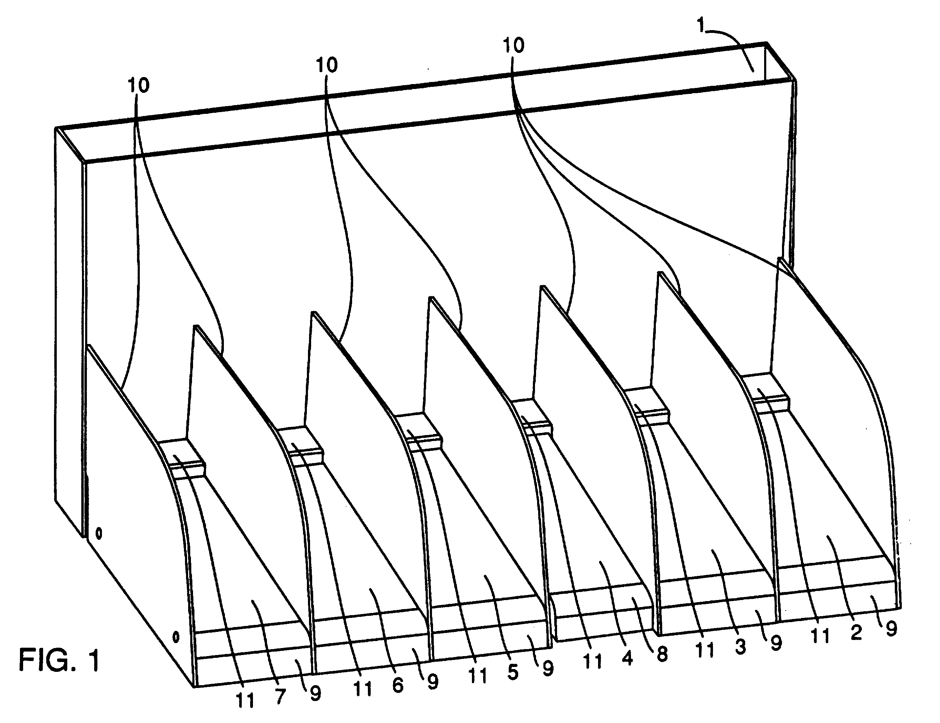

A titre d'exemple non limitatif, pour faciliter la compréhension de l'invention, on a représenté au dessin annexé un exemple de réalisation du dispositif selon l'invention.

En se reportant à cette figure, on voit que le dispositif selon l'invention est constitué par un alimentateur 1 et par six stalles ou compartiments 2 à 7. Ces compartiments sont séparés les uns des autres par des bat-flancs 10 ; de sorte que chaque compartiment est un espace rectangulaire dont les deux grands côtés sot constitués par deux bat-flancs 10, l'extrémité avant étant fermée par la paroi de l'alimentateur 1, à la base duquel se trouve une auge de nourrissement 11, l'extrémité arrière de chaque compartiment étant ouvert de façon à permettre un libre accès.

La distance séparant deux bat-flancs 10 est déterminée, en fonction de la taille et du poids des animaux se trouvant dans la case où est placé le dispositif, de façon qu'un seul animal puisse pénétrer dans un compartiment 2 à 7.

L'un des compartiments situé à proximité du centre du dispositif, à savoir le compartiment 4 dans l'exemple représenté, est muni d'un plateau de pesage 8.

De préférence le sol des autres compartiments est muni d'une dalle 9, par exemple en béton, ayant sensiblement la même hauteur et le même état de surface que le plateau de pesage 8 ; ceci afin que les animaux ne perçoivent pas de différences entre les compartiments, ceux-ci ayant tous le même aspect.

Dans cet exemple, la longueur du nourrisseur 1 est de 1,40 m ; il comporte six compartiments, dont chacun a une largeur de 23,3 cm. Un tel dispositif à six compartiments est destiné à un groupe de 36 porcelets.

Dans une telle installation, les porcelets d'un groupe peuvent se déplacer librement à l'intérieur d'une case et, en particulier, peuvent venir à tout instant se nourrir. Chaque fois qu'un animal entre dans le compartiment 4 il est pesé et son poids est enregistré et à chaque fois un seul animal est pesé.

A titre d'exemple, dans une installation prototype pour 36 porcelets, telle que celle décrite à la figurerons a enregistré une moyenne de 250 pesées par jour. on a donc une mesure statistique aléatoire du poids moyen individuel des animaux du groupe ce qui permet d'adapter leur ration de nourriture de façon très précise à leur augmentation de poids.

Le plateau de pesée 8 est de préférence équipé d'un ou plusieurs capteurs à jauge de contraintes reliés à un coffret électronique.

Le coffret électronique est muni d'un logiciel qui permet de traiter les différents poids instantanés mesurés pour :
- détecter la présence d'un animal sur le plateau,
- calculer le poids exact d'un animal,
- stocker en mémoire pour chaque visite d'un animal :
   . le poids de l'animal,
   . la date et l'heure de l'arrivée de l'animal sur le plateau,
   . le temps de présence de l'animal sur le plateau,
- calculer pour chaque période de temps prédéterminée la moyenne des poids individuels mesurés après avoir éliminé les poids aberrants,
- puis, pour stocker en mémoire pour chaque période :
   . la date et l'heure du début et de la fin de chaque période,
   . le nombre de pesées individuelles effectuées,
   . le poids individuel moyen calculé ainsi que tous les éléments statistiques résultant des pesées effectuées.

Ce coffret électronique est muni d'un clavier et d'un afficheur permettant :
- le réglage des paramètres de fonctionnement,
- la visualisation des données enregistrées.

Il est muni d'une interface de communication permettant le transfert des données vers un micro-ordinateur permettant:
- l'intégration des données dans un logiciel de traitement,
- l'impression des données sous forme de tableau et de graphique.

De préférence, ledit ordinateur pilote :
- l'évolution des quantités distribuées et les transitions alimentaires qui s'effectuent automatiquement en fonction des paramètres calculés après enregistrement,
- ainsi que le système de climatisation pour que celle-ci soit ajustée automatiquement en fonction des paramètres calculés.

Bien évidemment, l'invention n'est pas limitée au cas où l'appareil 1 est un alimentateur : cet appareil pouvant contenir également un dispositif d'abreuvement ; les animaux pénétrant dans un compartiment pouvant venir soit pour s'alimenter, soit pour s'abreuver, soit les deux à la fois, l'important étant qu'ils y restent suffisamment longtemps pour qu'une pesée correcte soit réalisée.

## Revendications

1. Procédé de contrôle automatique et continu de la prise de poids d'un groupe déterminé d'animaux consistant à utiliser l'attrait de l'aliment ou de l'abreuvement pour provoquer la venue, un par un, d'animaux sur un plateau de pesage, accessible naturellement à tous les animaux d'un groupe et équipé de moyens limitant son accès à un seul animal à la fois et tels que l'animal ne soit pesé que lorsqu'il vient s'alimenter ou s'abreuver ; de telle sorte que, à partir de ces pesées individuelles, on puisse établir un poids individuel moyen des animaux du groupe.

2. Procédé selon la revendication 1 consistant à piloter de façon automatique l'alimentation et/ou l'abreuvement des animaux faisant partie du groupe considéré de sorte que l'évolution des quantités distribuées et les transitions alimentaires s'effectuent automatiquement en fonction du poids calculé et d'autres paramètres calculés à partir des pesées individuelles enregistrées.

3. Procédé selon l'une quelconque des revendications 1 et 2 consistant à piloter de façon automatique le système de climatisation afin que ces paramètres soient ajustés en fonction du poids individuel moyen calculé.

4. Dispositif pour la mise en oeuvre du procédé selon les revendications 1 à 3 caractérisé par le fait qu'il est constitué par : un espace ou case, dans lequel est enfermé un nombre "n" d'animaux ; un alimentateur et /ou abreuvoir (1) comportant un nombre "m" de compartiments (1 à 10) individuels, et séparés les uns des autres, de façon à n'être accessible qu'à un seul animal à la fois mais d'accès libre ; et un plateau de pesage (8) placé dans l'un quelconque (4) des compartiments.

5. Dispositif selon la revendication 4 dans lequel les compartiments sont limités latéralement par des bat-flancs (10) et comportent chacun un alimentateur et/ou abreuvoir (11) à leur extrémité avant, l'extrémité arrière étant ouverte de façon à permettre un accès libre et l'espacement entre les bat-flancs (10) ne livrant passage qu'à un seul animal à la fois.

6. Dispositif selon la revendication 5 dans lequel le sol des compartiments ne comportant pas un plateau de pesage (8) est muni d'une margelle(9) de même hauteur.

7. Dispositif selon la revendication 6 dans lequel le plateau de pesage (8) et les margelles (9) ont le même aspect et le même état de surface.

8. Dispositif selon la revendication 7 dans lequel le coffret électronique est relié à un ordinateur qui permet de traiter les différentes mesures instantanées de poids afin de :
- détecter la présence d'un animal sur le plateau,
- calculer le poids exact de l'animal,
- stocker en mémoire pour chaque visite d'un animal :
. le poids de l'animal,
. la date et l'heure de l'arrivée de l'animal sur le plateau,
. le temps de présence de l'animal sur le plateau,
. calculer pour chaque période de temps déterminée la moyenne des poids individuels mesurés après avoir éliminé les poids aberrants,
- puis afin de stocker en mémoire pour chaque période :
. la date et l'heure de début et de fin de chaque période,
. le nombre de pesées effectuées,
. le poids individuel moyen calculé ainsi que tout élément statistique résultant des pesées enregistrées.

9. Dispositif selon la revendication 8 dans lequel le coffret électronique est muni d'un clavier et d'un afficheur permettant:
- le réglage des paramètres de fonctionnement,
- la visualisation des données enregistrées.

10. Dispositif selon la revendication 9 dans lequel le coffret électronique est équipé d'une interface de communication permettant le transfert des données vers un micro-ordinateur local ou à distance permettant :
- l'intégration des données dans un logiciel de traitement,
- l'impression des données sous forme de tableau et de graphique.

11. Dispositif selon la revendication 10 dans lequel l'ordinateur pilote : l'alimentation automatique des animaux pour que les transitions alimentaires s'effectuent automatiquement en fonction des paramètres calculés à partir des pesées individuelles enregistrées.

12. Dispositif selon la revendication 11 dans lequel l'ordinateur pilote le système de climatisation pour que celle-ci soit ajustée automatiquement en fonction desdits paramètres.
